# EUROPEAN PATENT APPLICATION

(11) **EP 3 514 063 A1**
(43) Date of publication of application: **24.07.2019**
(21) Application number: 16916278.1
(22) Date of filing: 16.09.2016
(51) Int. Cl.: B64D 11/06

(54) **AIRCRAFT BOX SEAT STRUCTURE**

(71) Applicant: Jamco Corporation, Mitaka-shi, Tokyo 181-8571 (JP)
(72) Inventor: KIMIZUKA, Ken, Mitaka-shi Tokyo 181-8571 (JP); KATAKURA, Sachiko, Mitaka-shi Tokyo 181-8571 (JP); ODA, Sayoko, Mitaka-shi Tokyo 181-8571 (JP)
(74) Representative: Novaimo
(86) International application number: PCT/JP2016/077505
(87) International publication number: WO 2018/051497

(57) **Abstract**

An aircraft box seat structure that defines an interior space having a plurality of seat units, the aircraft box seat structure including: an upper panel that is substantially rectangular and that defines an upper surface of the interior space; a pair of opposing side wall panels respectively coupled to two opposing sides of the upper panel; a side wall panel coupled to each of the upper panel and the pair of opposing side wall panels; an entrance side wall panel opposing the side wall panel and coupled to each of the upper panel and the pair of opposing side wall panels; and a partition member disposed substantially parallel to the pair of opposing side wall panels in the interior space and displaceable between a deployed position that divides the interior space into a plurality of private rooms and a housing position in which the plurality of private rooms are connected with each other.

## Description

### Technical Field

The present invention relates to an aircraft seat mounted in the passenger cabin of an aircraft, and more particularly relates to a box seat structure to be installed in a high class boarding area of an aircraft.

### Background Art

In seat units provided in conventional aircraft, a passenger cabin seat layout structure is known in which the four surrounding sides of a single seat are enclosed by wall surfaces to partition the area and secure a private space (for example, see Patent Document 1).

By forming the above-mentioned partitioned space, such a seat layout can enhance the value proposition of the unit by ensuring privacy for the passenger.

In addition, with respect to groups of 2 customers that travel together (couples), a seat layout structure is also known in which seat assembly parts that include a plurality of panels are adjacently disposed surrounding the periphery of the seat (for example, see Patent Document 2).

In such a seat layout, since the intermediate portion of the adjacent seat assembly parts is opened to such a degree that passengers can face each other while a panel of a predetermined height is arranged on the aisle side, it is possible to provide a pseudo-partitioned private room space for two people

### Citation List

### Patent Literature

[Patent Document 1] Japanese Translation of PCT International Application Publication No. 2007-523002
[Patent Document 2] Japanese Translation of PCT International Application Publication No. 2010-500212

### Summary of Invention

### Technical Problem

In order to create the sense of a private room as a partitioned space for one person, the seat unit disclosed in Patent Document 1 has a structure in which the above-described wall surfaces are attached while also being fixed to the floor surface of the passenger cabin.

In addition, the panels used in the seat layout structure disclosed in Patent Document 2 have a height sufficient to achieve a state in which the surroundings are enclosed when a passenger is seated, and the portion above the seat is open.

Since the wall surfaces and panels that partition the space are fixed to the floor surface in the seats disclosed in Patent Documents 1 and 2, the area of the private room space is limited, and the layout of the seats arranged inside is also restricted by the limited space.

Further, in the seats disclosed in Patent Documents 1 and 2, since the upper portion of the unit is open, when a couple sits side by side, for example, their conversation leaks outside of the partition, making it difficult to maintain quietness.

In view of the above, an object of the present invention is to provide an aircraft box seat structure capable of maintaining quietness while offering the sense of privacy of a private room space and allowing the size of the private room space to be variable.

### Solution to Problem

In order to achieve the above-described object, the aircraft box seat structure of the present invention that defines an interior space having a plurality of seat units includes: an upper panel that is substantially rectangular and that defines an upper surface of the interior space; a pair of opposing side wall panels respectively coupled to two opposing sides of the upper panel; a side wall panel coupled to each of the upper panel and the pair of opposing side wall panels; an entrance side wall panel opposing the side wall panel and coupled to each of the upper panel and the pair of opposing side wall panels; and a partition member disposed substantially parallel to the pair of opposing side wall panels in the interior space and displaceable between a deployed position that divides the interior space into a plurality of private rooms and a housing position in which the plurality of private rooms are connected with each other.

In the aircraft box seat structure according to a representative example of the present invention, the partition member is configured by a panel-shaped member having a height extending from the upper panel to the floor surface. At this time, it is preferable that the partition member be divided into a plurality of parts in the width direction.

Also, the housing position may be arranged on the entrance side wall panel.

In the aircraft box seat structure according to a representative example of the present invention, the partition member is configured by a curtain-shaped member or a wind-up type shutter having a height extending from the upper panel to the floor surface.

### Advantageous Effects of Invention

According to the present invention, it is possible to maintain quietness while offering the sense of privacy of a private room space and allowing the size of the private room space to be variable.

### Brief Description of Drawings

FIG. 1 is a partial top view illustrating a passenger cabin layout example of an aircraft in which the aircraft box seat structure according to a representative example of the present invention is applied.
FIG. 2 is a perspective view illustrating an overview of an aircraft box seat structure disposed in contact with the window side depicted in FIG. 1.
FIG. 3A is a main portion perspective view illustrating an overview of the structure and function of a partition member in the aircraft box seat structure according to a representative example of the present invention, and illustrates a deployed state of the partition member.
FIG. 3B is a main portion perspective view illustrating an overview of the structure and function of a partition member in the aircraft box seat structure according to a representative example of the present invention, and illustrates a first stage of a housing operation of the partition member.
FIG. 3C is a main portion perspective view illustrating an overview of the structure and function of a partition member in the aircraft box seat structure according to a representative example of the present invention, and illustrates a second stage of a housing operation of the partition member.
FIG. 3D is a main portion perspective view illustrating an overview of the structure and function of a partition member in the aircraft box seat structure according to a representative example of the present invention, and illustrates a third stage of a housing operation of the partition member.
FIG. 3E is a main portion perspective view illustrating an overview of the structure and function of a partition member in the aircraft box seat structure according to a representative example of the present invention, and illustrates a fourth stage of a housing operation of the partition member.
FIG. 3F is a main portion perspective view illustrating an overview of the structure and function of a partition member in the aircraft box seat structure according to a representative example of the present invention, and illustrates a fifth stage of a housing operation of the partition member.
FIG. 3G is a main portion perspective view illustrating an overview of the structure and function of a partition member in the aircraft box seat structure according to a representative example of the present invention, and illustrates a sixth stage of a housing operation of the partition member.
FIG. 3H is a main portion perspective view illustrating an overview of the structure and function of a partition member in the aircraft box seat structure according to a representative example of the present invention, and illustrates a seventh stage of a housing operation of the partition member.
FIG. 4A is a main portion perspective view illustrating a first modification of a partition member in the aircraft box seat structure according to a representative example of the present invention, and illustrates a deployed state of the partition member.
FIG. 4B is a main portion perspective view illustrating a first modification of a partition member in the aircraft box seat structure according to a representative example of the present invention, and illustrates a housed state of the partition member.
FIG. 5A is a main portion perspective view illustrating a second modification of a partition member in the aircraft box seat structure according to a representative example of the present invention, and illustrates a deployed state of the partition member.
FIG. 5B is a main portion perspective view illustrating a second modification of a partition member in the aircraft box seat structure according to a representative example of the present invention, and illustrates a housed state of the partition member.
FIG. 6 is a perspective view illustrating an overview of another modification of the aircraft box seat structure according to a representative example of the present invention.

### Description of Embodiment(s)

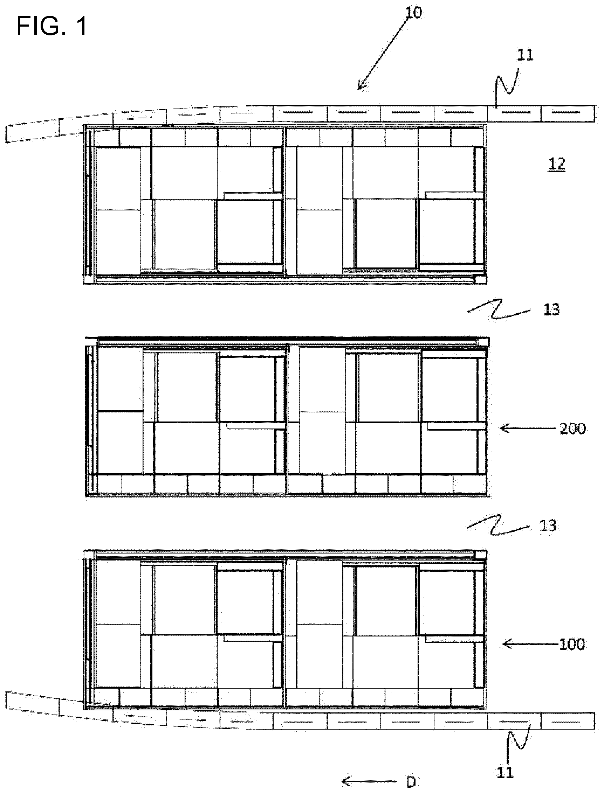

FIG. 1 is a partial top view illustrating a passenger cabin layout example of an aircraft in which the aircraft box seat structure according to a representative example of the present invention is applied.

In FIG. 1, the upper left side of the drawing is the front side of the aircraft and the right side is the rear side of the aircraft

As illustrated in FIG. 1, an aircraft 10 to which the aircraft seat structure according to the present invention is applied is constituted by an aircraft outer shell 11 and a passenger cabin 12 formed inside the aircraft outer shell 11.

In the passenger cabin 12, aircraft box seat structures 100 and 200 having longitudinal directions in the longitudinal direction of the aircraft are installed, and an aisle 13 is formed therebetween.

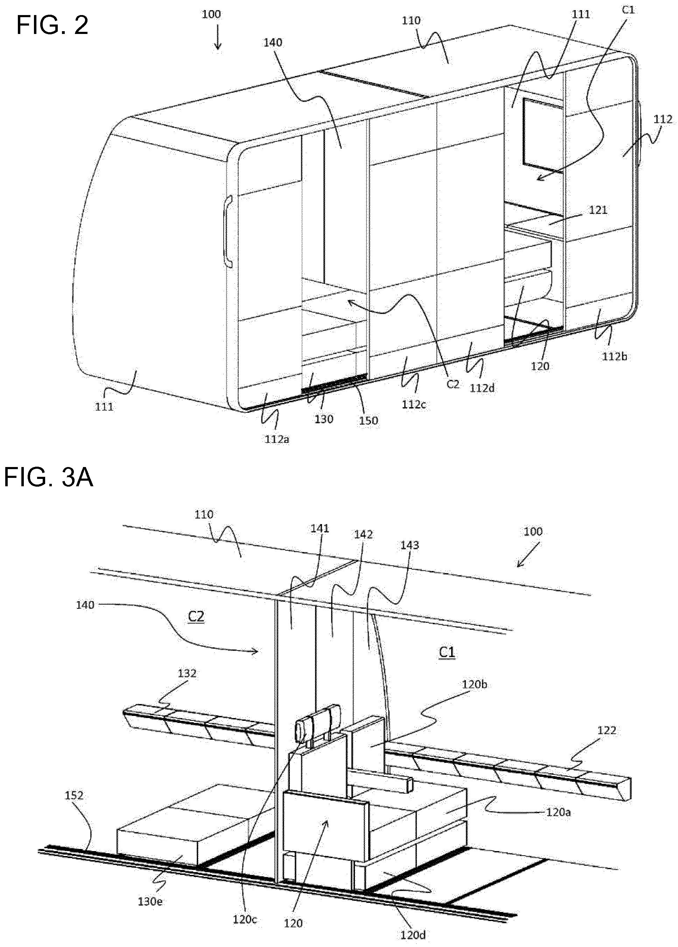

FIG. 2 is a perspective view illustrating an overview of an aircraft box seat structure disposed in contact with the window side depicted in FIG. 1.

As illustrated in FIG. 2, the aircraft box seat structure 100 according to a representative example of the present invention includes a substantially rectangular upper panel 110, a pair of opposing side wall panels 111 respectively coupled to two opposing sides of the upper panel 110, an entrance side wall panel 112 coupled to the upper panel and the pair of opposing side wall panels, a side wall panel (not illustrated in the Figures as it is on the opposite side of this field of view) opposing the entrance side wall panel 112 and coupled to the upper panel and each of the pair of opposing side wall panels, and a partition member 140 disposed substantially parallel to the pair of opposing side wall panels 111.

The aircraft box seat structure 100 has an interior space defined by the above-described upper panel, the side wall panels and the like, and the interior space is further divided into a first interior space C1 and a second interior space C2 by the partition member 140.

Also, in the first interior space C1, a first seat unit 120 and a first internal component 121 such as a housing portion or the like, for example, are arranged, and in the second interior space C2, a second seat unit 130 and a second internal component (not illustrated in the Figures) or the like are arranged.

In FIG. 2, the entrance side wall panel 112 is constituted by a first divided panel 112a and a second divided panel 112b separately located on the front and rear sides of the pair of opposing side wall panels 111, and a third divided panel 112c and a fourth divided panel 112d located therebetween.

As a result of such an arrangement, openings that serve as the entrances and exits to the first interior space C1 and the second interior space C2 are respectively formed between the first divided panel 112a and the third divided panel 112c and between the second divided panel 112b and the fourth divided panel 112d.

The first to fourth divided panels 112a to 112d are slidably mounted on a rail 150 disposed on the floor surface along the front-rear direction.

Further, it is preferable that the first to fourth divided panels 112a to 112d are formed to have the same width. As a result, by sliding them and collecting them in one location, a sense of freedom can be provided from the side.

The side wall panel located on the aircraft outer shell 11 side of the aircraft 10, which is not shown, has an arcing or curved cross-sectional shape corresponding to the aircraft outer shell 11.

In addition, an opening portion is formed in the side wall panel in accordance with the location of the window formed in the aircraft outer shell 11. By attaching an opening/closing-type shutter or the like to this, the light from the aircraft outer shell 11 can be brought into the interior space of the aircraft box seat structure 100.

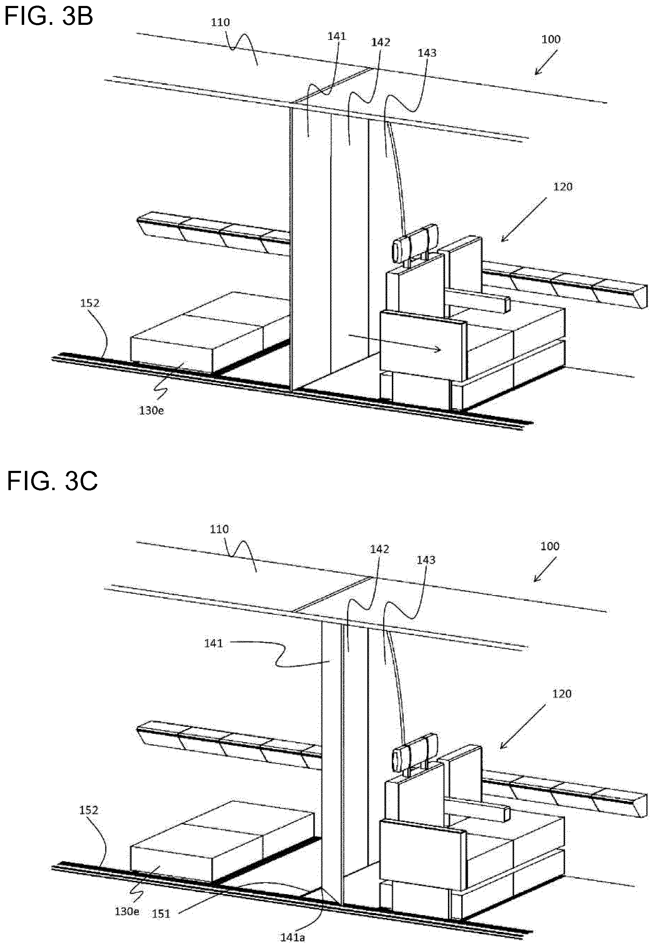

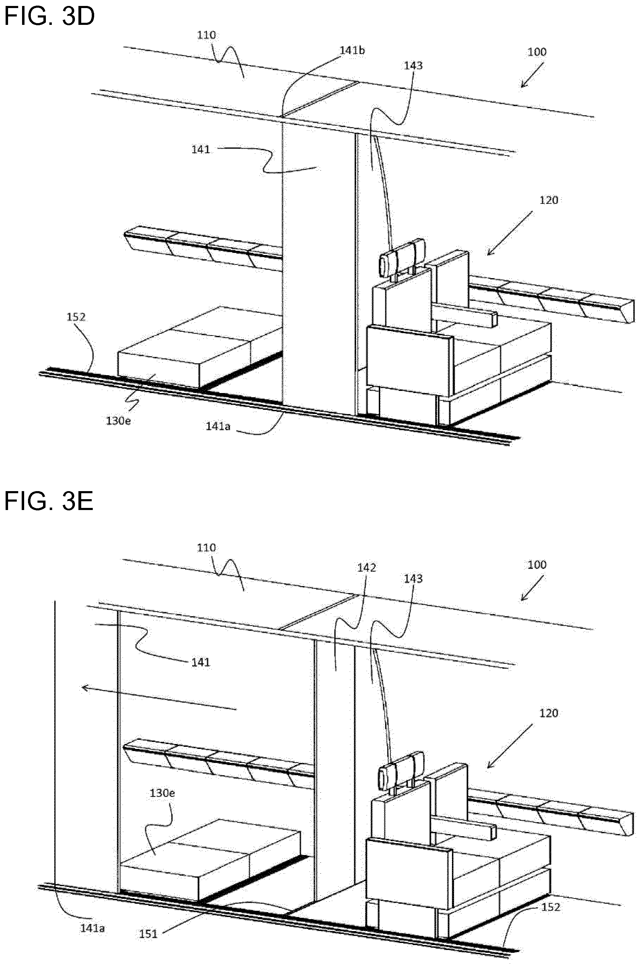

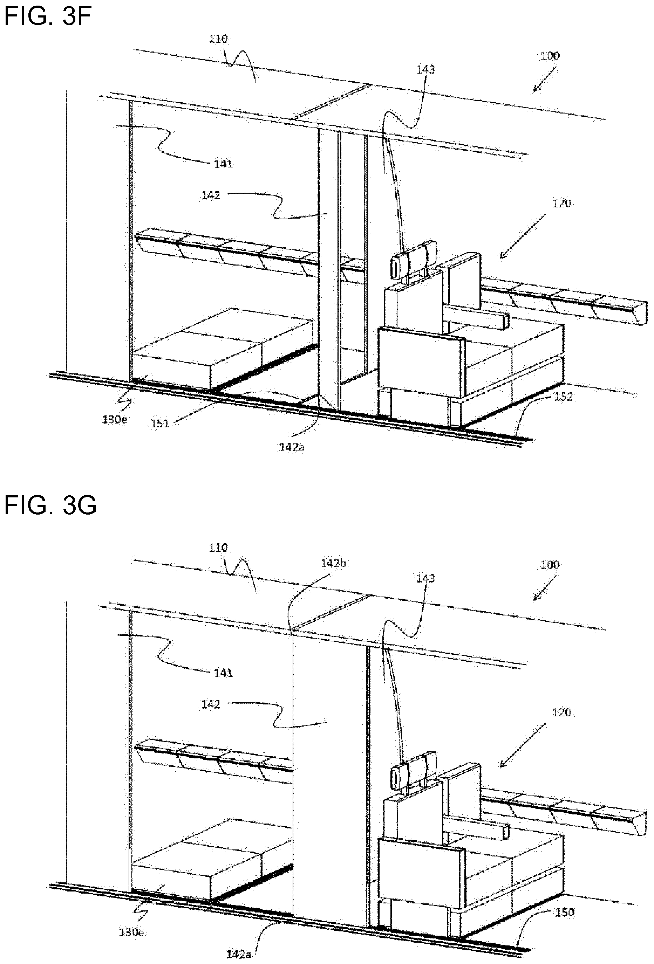

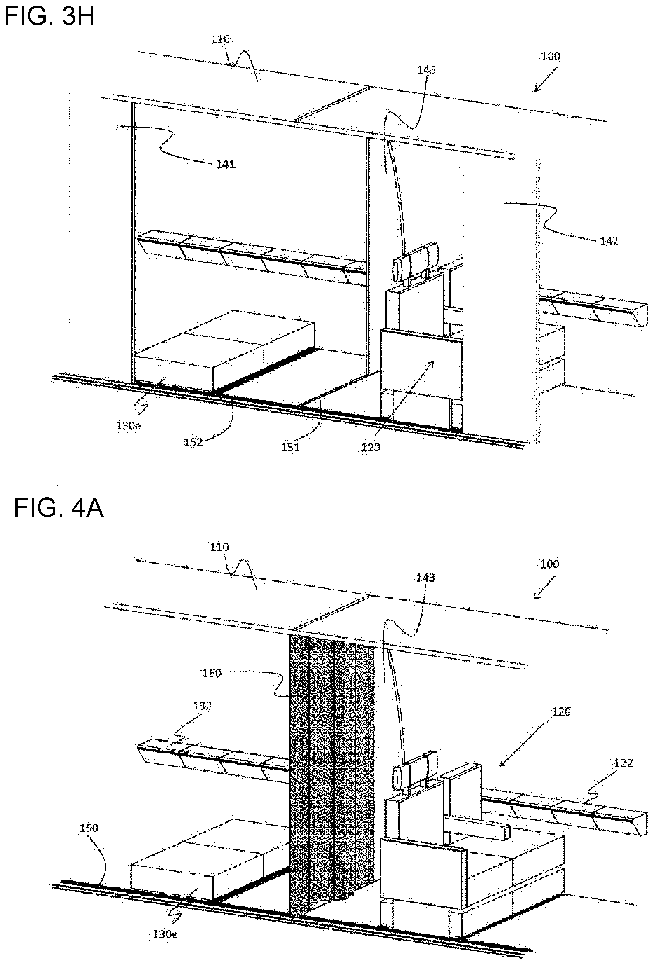

FIG. 3 is a main portion perspective view illustrating an overview of the structure and function of a partition member in the aircraft box seat structure according to a representative example of the present invention.

It should be noted that FIG. 3A illustrates a deployed state of the partition member, FIG. 3B illustrates a first stage of a housing operation of the partition member, FIG. 3C illustrates a second stage of a housing operation of the partition member, FIG. 3D illustrates a third stage of a housing operation of the partition member, FIG. 3E illustrates a fourth stage of a housing operation of the partition member, FIG. 3F illustrates a fifth stage of a housing operation of the partition member, FIG. 3G illustrates a sixth stage of a housing operation of the partition member, and FIG. 3H illustrates a seventh stage of a housing operation of the partition member.

As illustrated in FIG. 3A, a first interior space C1 and a second interior space C2 partitioned by the partition member 140 are formed inside the aircraft box seat structure 100 according to the present invention.

In the first interior space C1, for example, a seat unit 120, a first internal component (see FIG. 2), a side table 122 or the like are arranged, and similarly, in the second interior space C2 as well, a seat unit, a second internal component, a side table 132 or the like are arranged.

Here, the seat unit 120 is constituted by, for example, a seating portion 120a, a backrest portion 120b, a headrest 120c, and an extension portion 120d for the case of conversion to a bed state, or the like, and the second interior component includes, for example, a cushion 130e in addition to the above-described housing portion.

As an example, the partition member 140 is constituted by a first dividing partition member 141, a second dividing partition member 142, and a third dividing partition member 143.

In addition, the partition member 140 is configured to be guided by the guide rails 151 and 152 (see FIG. 3C and FIG. 3D), to be described later, that are provided on the upper panel 110 and the floor surface so as to be displaceable between a deployed position (the position illustrated in FIG. 3A) in which the interior of the aircraft box seat structure 100 according to the present invention is divided into a plurality of private rooms and a housing position in which these private rooms are connected with each other.

Next, with reference to FIG. 3B to FIG. 3H, the overview of the housing operation of the partition member 140 will be described.

First, as the first stage of the housing operation, as illustrated in FIG. 3B, the seat unit 120, the cushion 130e of the second internal component, and the like are moved to a location away from the vicinity of the partition member 140.

At this time, a mechanism for movement such as a rail (not illustrated in the Figures), a roller, or the like may be interposed between the seat unit 120 or the cushion 130e and the floor surface.

Subsequently, as the second stage, as illustrated in FIG. 3C, the first dividing partition member 141 is rotated around one vertical side 141a of the first dividing partition member 141.

Next, as the third stage, as illustrated in FIG. 3D, the rotation of the first dividing partition member 141 is further advanced, and the vertical side 141a is moved to the position of the guide rail 152 arranged parallel to the rail 150 illustrated in FIG. 2.

Subsequently, as the fourth stage, as illustrated in FIG. 3E, the first dividing partition member 141 is slid along the guide rail 152 and moved to a position (the housing position) that overlaps with the entrance side wall panel 112 illustrated in FIG. 2.

Next, as the fifth stage, as illustrated in FIG. 3F, the second dividing partition member 142 is rotated around one vertical side 142a of the second dividing partition member 142.

Subsequently, as the sixth stage, as illustrated in FIG. 3G, the rotation of the second dividing partition member 142 is further advanced, and the vertical side 142a is moved to the position of the guide rail 152.

Next, as the seventh stage, as illustrated in FIG. 3H, the second dividing partition member 142 is slid along the guide rail 152 and moved to the above-described housing position. Thus, the housing operation is completed.

By including these configurations, the aircraft box seat structure according to the present invention is configured such that a box-shaped interior space surrounded by an upper panel, side wall panels, and the like is partitioned into a plurality of private rooms by a partition member that is configured to move freely between a deployed position and a housing position. In this way, it is possible to maintain quietness while offering the sense of privacy of a private room space and allowing the size of the private room space to be variable.

In addition, since the housing position of the partition member overlaps with the position of the side wall panel, the utilization efficiency of the interior space can be improved.

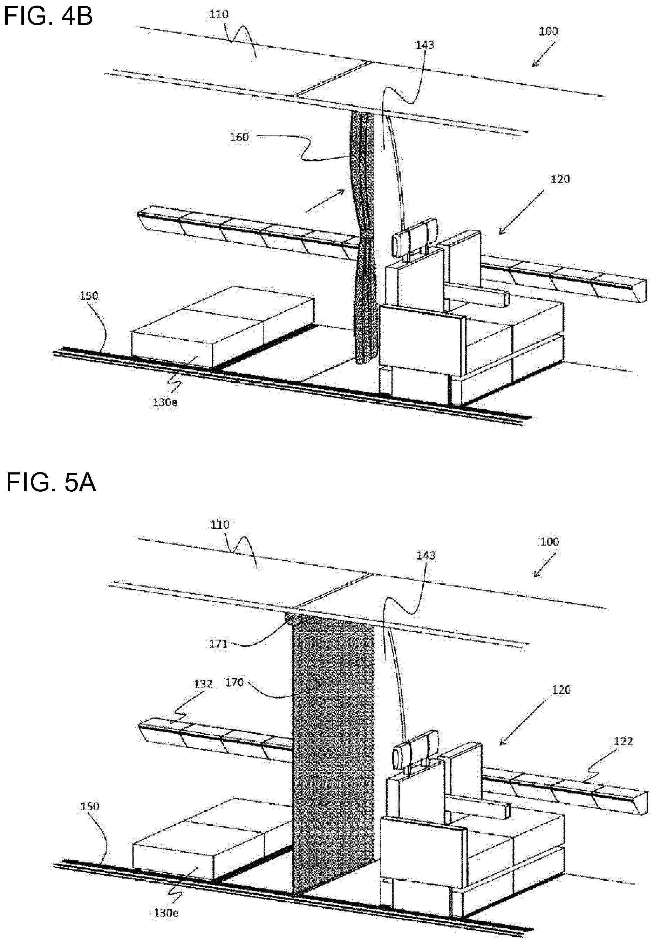

FIG. 4 is a main portion perspective view illustrating a first modification of a partition member in the aircraft box seat structure according to a representative example of the present invention, where FIG. 4A illustrates a deployed state of the partition member and FIG. 4B illustrates a housed state of the partition member.

As illustrated in FIG. 4A, in the first modification, the partition member 160 is constituted by a foldable member having a height extending, from an upper panel constituted by a curtain or the like having high light-blocking properties and sound insulating properties, for example, to the floor surface.

The partition member 160 includes a runner at its upper end, and as illustrated in FIG. 4B, this runner is guided and moved by a guide rail (not illustrated in the Figures) disposed inside the upper panel 110.

In addition, a dividing partition member 143 as illustrated in FIG. 3 is disposed at the position of the partition member 160 on the aircraft outer shell side in consideration of sound insulation or airtightness.

With such a configuration, since the aircraft box seat structure according to the first modification of the present invention does not require the provision of an additional guide rail on the floor surface, it is possible to simplify the structure while offering the sense of privacy of a private room space.

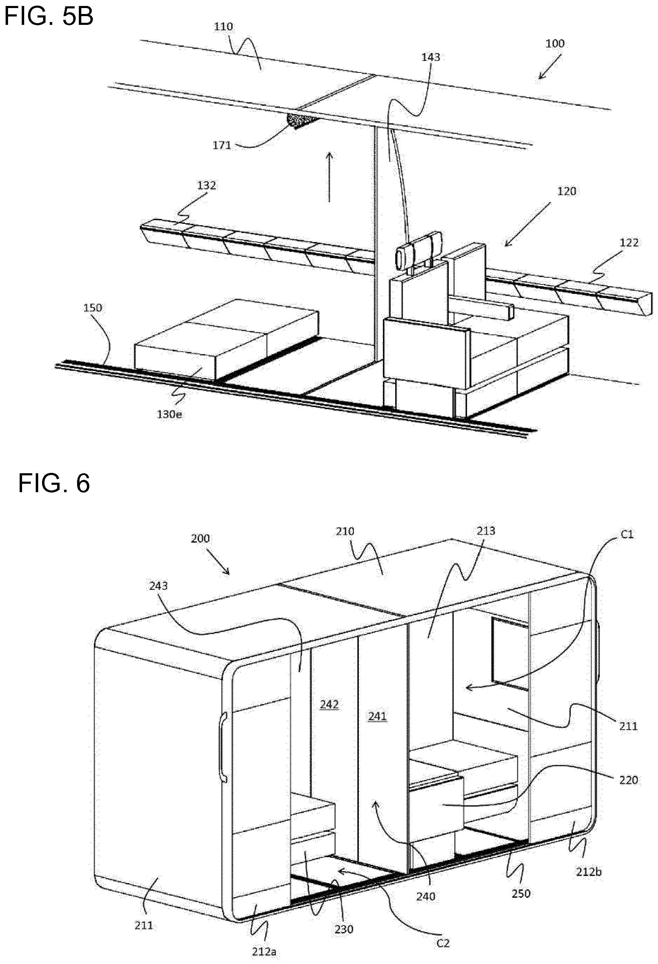

FIG. 5 is a main portion perspective view illustrating a second modification of a partition member in the aircraft box seat structure according to a representative example of the present invention, where FIG. 5A illustrates a deployed state of the partition member and FIG. 5B illustrates a housed state of the partition member.

As illustrated in FIG. 5A, in the second modified example, the partition member 170 is constituted by a wind-up type member having a height extending, from an upper panel constituted by a shutter or the like having light shielding properties and sound insulating properties, for example, to the floor surface.

The partitioning member 170 has a wind-up mechanism 171 at its upper end, and as illustrated in FIG. 5B, by attaching the wind-up mechanism 171 on the inner side of the upper panel 110, the position of the wind-up mechanism 171 is configured as the housing position.

Also, as in the case of the first modification, the dividing partition member 143 illustrated in FIG. 3 is disposed at the position of the partition member 170 on the aircraft outer shell side in consideration of sound insulation or airtightness.

With such a configuration, since the aircraft box seat structure according to the first modification of the present invention does not require the provision of an additional guide rail on the floor surface and since the arrangement space of the storage position can be further minimized, it is possible to simplify the structure while offering the sense of privacy of a private room space.

FIG. 6 is a perspective view illustrating an overview of another modification of the aircraft box seat structure according to a representative example of the present invention.

As illustrated in FIG. 6, the aircraft box seat structure 200 according to a modification of the present invention includes a substantially rectangular upper panel 210, a pair of opposing side wall panels 211 respectively coupled to two opposing sides of the upper panel 210, an entrance side wall panel 212 coupled to the upper panel and the pair of opposing side wall panels, a side wall panel 213 opposing the entrance side wall panel 212 and coupled to the upper panel and each of the pair of opposing side wall panels, and a partition member 240 disposed substantially parallel to the pair of opposing side wall panels 211.

The aircraft box seat structure 200 has an interior space defined by the above-described upper panel, the side wall panels and the like, and the interior space is further divided into a first interior space C1 and a second interior space C2 by the partition member 240.

Also, in the first interior space C1, a first seat unit 220 and a first internal component (not illustrated in the Figures) such as a housing portion or the like, for example, are arranged, and in the second interior space C2, a second seat unit 230 and a second internal component (not illustrated in the Figures) or the like are arranged.

In FIG. 6, the entrance-side side wall panel 212 is constituted by a first divided panel 212a and a second divided panel 212b separately located on the front and rear sides of the pair of opposing side wall panels 211, and a third divided panel and a fourth divided panel that can freely come and go on this interval via the rail 250.

In FIG. 6, the third divided panel and the fourth dividing panel are arranged at positions overlapping with the first divided panel 212a or the second divided panel 212b and illustration thereof is omitted.

As a result of such an arrangement, openings serving as the entrances and exits to the first interior space C1 and the second interior space C2 are respectively formed on the entrance side wall panel 212 side of the aircraft box seat structure 200.

The side wall panel 213 is arranged in a shape parallel to the entrance side wall panel 212 so as to face the aisle illustrated in FIG. 1.

In addition, a window having an attached opening/closing type shutter or the like may be additionally provided on the side wall panel 213. As a result, the light from the aisle 13 facing the side wall panel 213 can also be brought into the interior space of the aircraft box seat structure 200.

By including these configurations, the aircraft box seat structure according to the another modification of the present invention is configured such that a box-shaped interior space surrounded by an upper panel, side wall panels, and the like is partitioned into a plurality of private rooms by a partition member that is configured to move freely between a deployed position and a housing position. In this way, it is possible to maintain quietness while offering the sense of privacy of a private room space and allowing the size of the private room space to be variable.

Further, in addition to the above-mentioned effects, since a sealed private room space in which aisles can be arranged on both sides can be formed, it is possible to provide more room space in the passenger cabin.

Although the configuration of the aircraft box seat structure according to a representative example of the present invention has been described above, the aircraft seat structure according to the present invention is not limited to the above-mentioned specific examples, and various modifications can be made.

For example, in the above-described specific example, a case in which the partition member 140 constituted by a plurality of dividing partition members is housed in a housing position parallel to the entrance side wall panel 112 was illustrated, but a configuration may be utilized in which a plurality of partition members are slid in the arrangement direction (for example, a direction along the guide rail illustrated in FIG. 3C) so as to be housed in a housing position that overlaps with the third dividing partition member 143.

In addition, in the above-described specific example, a case in which the partition member 140 was provided at one location and partitioned into the two interior spaces C1 and C2 was illustrated, but the arrangement locations of the partition member 140 may be increased to make the number of interior spaces two or more. In this way, in addition to couples (groups of 2), it becomes possible to adapt the space based on the purpose of use, and share the box seat in the case of groups of 3 people or more or families..

Further, it is also possible to make various modifications to the above-described embodiment without departing from the spirit of the present invention.

### Reference Signs List

- 10: Aircraft
- 11: Aircraft outer shell
- 12: Passenger cabin
- 13: Aisle
- 100, 200: Aircraft box seat structure
- 110, 210: Upper panel
- 111, 211: Pair of opposing side wall panels
- 112, 212: Entrance side wall panel
- 120, 220: First seat unit
- 130, 230: Second seat unit
- 140, 160, 170, 240: Partition member
- 150, 250: Rail

## Claims

1. An aircraft box seat structure that defines an interior space having a plurality of seat units, the aircraft box seat structure comprising:
an upper panel that is substantially rectangular and that defines an upper surface of the interior space;
a pair of opposing side wall panels respectively coupled to two opposing sides of the upper panel;
a side wall panel coupled to each of the upper panel and the pair of opposing side wall panels;
an entrance side wall panel opposing the side wall panel and coupled to each of the upper panel and the pair of opposing side wall panels; and
a partition member disposed substantially parallel to the pair of opposing side wall panels in the interior space and displaceable between a deployed position that divides the interior space into a plurality of private rooms and a housing position in which the plurality of private rooms are connected with each other.

2. The aircraft box seat structure according to claim 1, wherein:
the partition member is a panel-shaped member having a height extending from the upper panel to the floor surface.

3. The aircraft box seat structure according to claim 2, wherein:
the partition member is divided into a plurality of parts in a width direction.

4. The aircraft box seat structure according to claim 2 or 3, wherein:
the housing position is arranged on the entrance side wall panel.

5. The aircraft box seat structure according to claim 1, wherein:
the partition member is a curtain-shaped member having a height extending from the upper panel to the floor surface.

6. The aircraft box seat structure according to claim 1, wherein:
the partition member is a wind-up type shutter having a height extending from the upper panel to the floor surface.
